# EUROPÄISCHE PATENTANMELDUNG

(11) **EP 2 410 139 A1**
(43) Veröffentlichungstag der Anmeldung: **25.01.2012**
(21) Anmeldenummer: 10007450.9
(22) Anmeldetag: 19.07.2010
(51) Int. Cl.: F01D 25/30, F02K 1/04

(54) **Abgasdiffusor für eine Gasturbine**

(71) Anmelder: SIEMENS AKTIENGESELLSCHAFT, 80333 München (DE)
(72) Erfinder: Bröker, Marc, 46535 Dinslaken (DE); Buchal, Tobias, Dr., 40489 Düsseldorf (DE)

(57) **Zusammenfassung**

Die Erfindung betrifft einen Abgasdiffusor (20) mit einem verlängerten Nabenkörper (24), bei dem die Verlängerung durchströmbare Wände (30) umfasst. Die durchströmbaren Wände (30) erstrecken sich in Axialrichtung des Abgasdiffusors (20) und können beispielsweise als plattenförmige Lochbleche oder auch als zylindrische Lochbleche ausgebildet sein. Mit Hilfe der durchströmbaren Wände (30) ist es möglich, die im Abgasdiffusor (20) strömende Abgasströmung derart zu beeinflussen, dass je nach Betriebszustand der Gasturbine (1) entweder verkleinerte Rückströmzonen hinter dem Nabenende auftreten oder der Abgasdiffusor (20) mit einem verbesserten Wirkungsgrad arbeitet.

## Beschreibung

Die Erfindung betrifft einen Abgasdiffusor für eine Gasturbine, mit einem sich in Axialrichtung erstreckenden Strömungskanal, welcher radial außen von einer Außenwand begrenzt ist und in dessen Zentrum ein Nabenkörper vorgesehen ist.

Gasturbinen und die für diese verwendeten Abgasdiffusoren sind aus dem Stand der Technik längstens bekannt. Beispielsweise ist aus der DE 198 05 115 A1 ein Abgasdiffusor mit einem vergleichsweise großen Öffnungswinkel von 10° und mehr bekannt. Dieser eher große Öffnungswinkel wird erreicht, indem im Zentrum des Diffusorkanals ein sich in Axialrichtung erstreckender Leitkörper zur Verlängerung einer ansonsten kurzen Gasturbinennabe vorgesehen ist. Durch die Verwendung des Leitkörpers wird der Abgasdiffusor als Ringdiffusor ausgebildet. Dadurch werden größere Gebiete von Rückströmungszonen hinter der Gasturbinennabe vermieden, was sich vorteilhaft auf den Wirkungsgrad des Abgasdiffusors auswirkt. Nachteilig ist jedoch, dass der Leitkörper vergleichsweise lang ist und aufgrund seiner Länge deswegen durch zusätzliche Streben abgestützt werden muss. Weiter sind die aerodynamischen Einflüsse der Lagerstreben unberücksichtigt.

Die bekannten kurzen Gasturbinennaben enden zumeist unmittelbar hinter dem turbinenseitigen Lager des Gasturbinenrotors. Sie weisen jedoch besonders große Rückströmzonen auf. Allerdings sind die kurzen Gasturbinennaben auch besonders preiswert.

Ferner ist aus der EP 1 970 539 A1 ein Abgasdiffusor bekannt, der im Inneren ein zur Außenwand konzentrisches ringförmiges Leitelement aufweist. Das Leitelement ist dabei derartig ausgestaltet, dass zwischen Außenwand und Leitelement ein Düsenkanal ausgebildet ist, mit Hilfe dessen die wandnahe Strömung beschleunigt werden kann. Dadurch ist es möglich, stromab des Leitelements wandnahe Strömungsablösungen zu vermeiden. Eine Beeinflussung der Kernströmung, wo Rückströmungen auftreten können, ist mit Hilfe des Leitelements jedoch nicht möglich.

Weiter besteht das Bestreben, die hinter der Gasturbinennabe angeordnete Rückströmzone nach Möglichkeit zu vermeiden bzw. deren Größe zu minimieren, damit selbst im Teillastbetrieb der Gasturbine eine große Effizienz des Abgasdiffusors erreicht und eine große Betriebssicherheit gewährleistet werden kann. Bei zu weit stromab reichenden Rückströmzonen besteht die Gefahr, dass diese einen dem Abgasdiffusor nachgeordneten Kessel erreichen können, was dessen Arbeitsweise signifikant verschlechtert. Auch im Falle von dort installierten Nachbrennern würde dies zu einem Flammenrückschlag führen, wodurch der kombinierte Betrieb von Gasturbinen und Nachbrennern stark eingeschränkt ist.

Der Erfindung liegt die Aufgabe zugrunde, einen Abgasdiffusor für eine Gasturbine anzugeben, der einen möglichst hohen Wirkungsgrad der Gasturbine und einen sicheren Betrieb von der Gasturbine nachgeordneten Kesseln und Nachbrennern für jeden Betriebszustand der Gasturbine gewährleistet.

Die der Erfindung zugrunde liegende Aufgabe wird durch einen Abgasdiffusor gemäß den Merkmalen des Anspruchs 1 gelöst.

Die Erfindung sieht vor, dass der Abgasdiffusor für eine Gasturbine einen sich in Axialrichtung erstreckenden Strömungskanal, welcher radial außen von einer Außenwand begrenzt ist und in dessen Zentrum ein Nabenkörper vorgesehen ist, aufweist, wobei erfindungsgemäß der Nabenkörper zumindest eine teilweise durchströmbare Wand umfasst.

Der Erfindung liegt dabei die Erkenntnis zugrunde, dass mit Hilfe der teilweise durchströmbaren Wand, instationäre Druckschwankungen und somit ein instationäres Verhalten der Rückströmzone hinter dem Nabenende abgemildert, bzw. vermieden werden kann. Bevorzugtermaßen sind am ursprünglichen Ende des Nabenkörpers zwei senkrecht zueinander stehende Wände angeordnet, die zum Nabenkörper gehören, diesen verlängern und sich in dasjenige Gebiet erstrecken, indem bisher die Rückströmzone ausgebildet war. Im Diffusorraum betrachtet erstrecken sich folglich die beiden senkrecht zueinander stehenden Wände entlang der Axialrichtung und somit entlang der Hauptströmungsrichtung des Abgases. Aufgrund der Tatsache, dass das die Turbine verlassende Abgas drallbehaftet durch den Abgasdiffusor strömt, und auch die Rückströmzone drallbehaftet ist, kann selbst mit den sich parallel zur Hauptströmungsrichtung erstreckenden Wänden eine Verkleinerung der Rückströmzone erreicht werden, was auch den Betrieb von am Ende des Abgasdiffusors angeordneten Kesseln oder/und Nachbrennern verbessert.

Gemäß einer ersten vorteilhaften Weiterbildung umgreift die Wand zumindest teilweise einen Hohlraum. Dadurch ist es möglich, den Nabenkörper im Prinzip teilweise durchströmbar auszugestalten. Beispielsweise kann die zur Lagerung des Gasturbinenrotors erforderliche Diffusornabe mit Hilfe einer zylindrischen oder konischen perforierten Wand verlängert werden, wodurch dann lediglich der verlängerte Teil dieses Nabenkörpers durchströmbar ist.

Zur Erreichung der Durchströmbarkeit sind vorzugsweise eine Vielzahl von gleichmäßig verteilten Löchern in der Wand vorgesehen. Die Wand wird folglich von einem Lochblech gebildet. Durch die Durchströmung des Nabenkörpers kann der Druck auf der Rückseite, d. h. im Strömungsschatten der Nabe angehoben werden und so wiederum die Länge und Größe der Rückströmung hinter der Nabe verkleinert werden. Auch können instationäre Druckschwankungen und somit ein instationäres Verhalten der Rückströmzone abgemindert werden.

Es ist dabei nicht erforderlich, dass die in der Wand vorgesehenen Löcher alle einen identischen Durchmesser aufweisen. Folglich können die Löcher auch unterschiedliche Größen aufweisen.

Um die bestmögliche Konfiguration des durchströmbaren Nabenkörpers zu erreichen, kann während der ersten Inbetriebsetzung einer Gasturbine, die mit dem erfindungsgemäßen Abgasdiffusor ausgestattet ist, die Durchströmbarkeit des Nabenkörpers durch Verstopfen bzw. Abdecken der Löcher oder durch nachträgliches Hinzufügen angepasst werden.

Gemäß einer weiteren vorteilhaften Ausgestaltung ist die Durchströmbarkeit der Wand während des Betriebs einstellbar. Dadurch ist es möglich, für den jeweiligen Betriebspunkt der Gasturbine den Diffusorwirkungsgrad zu optimieren. Durch die einstellbare Durchströmbarkeit des Nabenkörpers kann der Druck auf der Rückseite der Nabe bestmöglich angehoben werden und so wiederum die Länge und Größe der Rückströmung hinter der Nabe verkleinert werden. Auch ist es möglich, die Strömung im Diffusor für jeden Betriebspunkt optimal an die jeweiligen Erfordernisse - beispielsweise maximaler Wirkungsgrad, Vergleichmäßigung der Strömung, etc. - anzupassen. Die Durchströmbarkeit der Wand kann vergleichsweise einfach einstellbar sein, wenn die durchströmbare Querschnittsfläche der Löcher veränderbar ist. Die Veränderung der durchströmbaren Querschnittsfläche der Löcher wird beispielsweise mit Hilfe eines zweiten analogen Zylinders erreicht, der achsparallel angeordnet und gegenüber der Wand um die Maschinenachse drehbar gelagert ist, um die in beiden Zylindern angeordneten Öffnungen bzw. Löcher vollständig, teilweise oder gar nicht in Überdeckung bringen zu können.

Zweckmäßigerweise weist eine stationäre, zur Energieerzeugung vorgesehene Gasturbine den vorgenannten Abgasdiffusor auf.

Die vorgenannte Erfindung wird anhand mehrerer Ausführungsbeispiele nachfolgend im Detail näher erläutert.

Es zeigen schematisch:
- FIG 1: eine Gasturbine in einem Längsteilschnitt,
- FIG 2: einen Abgasdiffusor einer Gasturbine mit am Nabenkörper angeordneten Lochblechen in einem Längsschnitt,
- FIG 3: einen Querschnitt des Abgasdiffusors nach FIG 2,
- FIG 4: in einem Längsschnitt eine zweite Ausgestaltung eines Abgasdiffusors mit einer zylindrischen perforierten Nabenverlängerung und
- FIG 5: als dritte Ausgestaltung den Abgasdiffusor nach FIG 4 mit einer perforierten Nabenverlängerung mit einstellbarer Durchströmung.

In allen Figuren sind identische Bezugszeichen für die gleichen Merkmale verwendet.

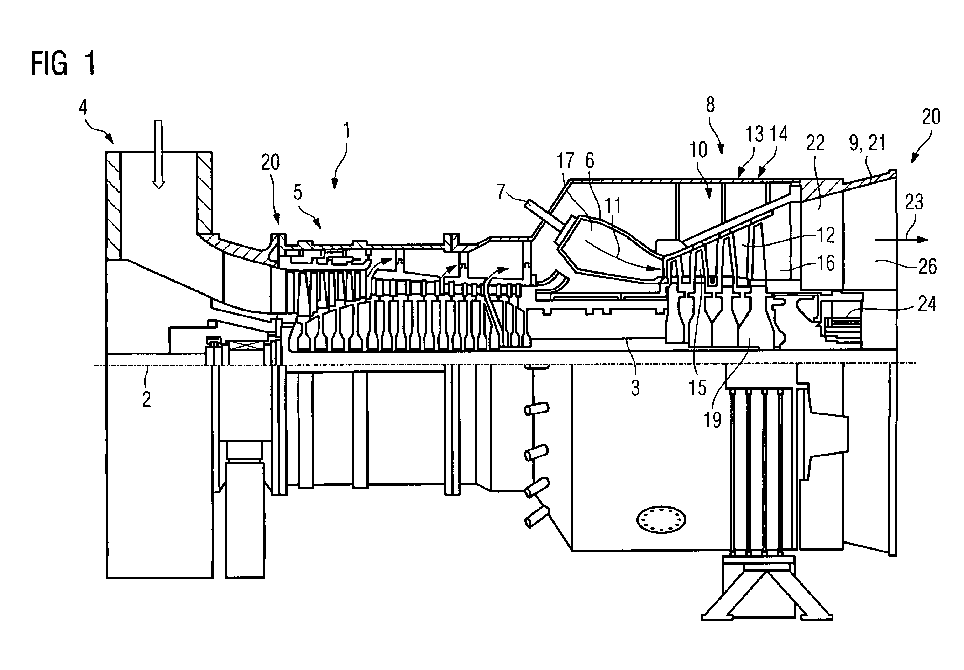

FIG 1 zeigt eine Gasturbine 1 in einem Längsteilschnitt. Sie weist im Inneren einen um eine Maschinenachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 umgibt einen Verbrennungsraum 17, der mit einem ringförmigen Heißgaskanal 16 verbunden ist. Dort bilden vier hintereinander geschaltete Schaufelstufen 10 die Turbineneinheit 8. Jede Schaufelstufe 10 ist aus zwei Schaufelringen gebildet. In Strömungsrichtung eines in der Ringbrennkammer 6 erzeugten Heißgases 11 gesehen, folgt im Heißgaskanal 16 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 jeweils mittels einer Scheibe 19 am Rotor 3 angebracht sind. An dem Rotor 3 ist ein Generator oder eine Arbeitsmaschine (nicht dargestellt) angekoppelt.

Stromab der Turbineneinheit 8 schließt sich an den Heißgaskanal 16 das Abgasgehäuse 9 an. Das Abgasgehäuse 9 ist der einlaufseitige Teil eines Abgasdiffusors 20 der Gasturbine 1. Damit geht der Heißgaskanal 16 in den Strömungskanal 26 des Abgasdiffusors 20 über. Die im Abgasgehäuse 9 angeordneten Rippen 22 stützen das turbinenseitige Ende des Rotors 3 ab, wobei dieses von einem Nabenkörper 24 gekapselt ist. Der Nabenkörper 24 endet axial im Strömungskanal 26 und ist im Zentrum, also konzentrisch zur Maschinenachse 2 des Abgasdiffusors 20 angeordnet.

Die äußere Begrenzung des Abgasdiffusors 20 wird von einer Außenwand 21 gebildet, die kreisförmig ausgebildet und konzentrisch zur Maschinenachse 2 angesiedelt ist. Die Außenwand 21 ist kreisförmig und erstreckt sich divergierend in Strömungsrichtung der Diffusorströmung 23. Die Diffusorströmung 23 ist somit das Abgas, welches aus dem Heißgas 11 nach dessen Expansion in der Turbineneinheit 8 entsteht.

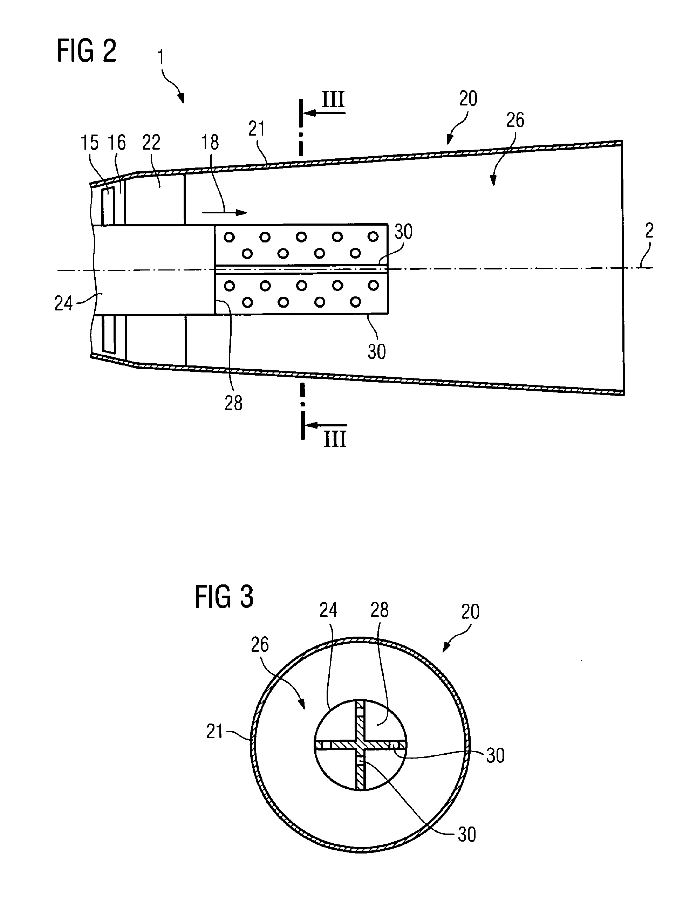

FIG 2 zeigt einen Längsschnitt durch den Abgasdiffusor 20, der Gasturbine 1, deren turbinenseitiges Ende in FIG 2 links dargestellt ist. Stromab der Laufschaufeln 15 der letzten Turbinenstufe sind die entlang des Umfangs des Strömungskanals 26 verteilten profilierten Rippen 22 angeordnet, die zur turbinenseitigen Lagerung des Rotors 3 vorgesehen sind. Die Rippen 22 werden auch als Lagerstern bezeichnet und stützen einen Nabenkörper 24 ab, der das turbinenseitige Lager des Rotors 3 vor den im Strömungskanal 26 strömenden Abgas 18 abschirmt. Der Strömungskanal 26 ist stromauf ringförmig ausgebildet und geht dann in eine Kreisform über aufgrund des Wegfalls des Nabenkörpers 24. Der Nabenkörper 24 umfasst an seiner dem Ausgang des Abgasdiffusors 20 zugewandten stirnseitigen Fläche 28 zwei als Lochbleche ausgebildete Wände 30. Die beiden Wände 30 stehen senkrecht zueinander und erstrecken sich jeweils in Axialrichtung entlang der Maschinenachse 2. Somit steht eine der beiden Wände 30 horizontal und die andere vertikal, bezogen auf die Horizontalebene. Abweichungen davon sind möglich. Die beiden Lochbleche verlängern den Nabenkörper 24 und sollen zur Reduzierung von instationären Wirbelablösungen beitragen. Im gezeigten Ausführungsbeispiel nach FIG 2 und nach FIG 3 weisen die Lochbleche jeweils eine rechteckige Kontur auf. Prinzipiell ist auch denkbar, dass die Lochbleche eine in Axialrichtung divergierende oder konvergierende Form aufweisen, so dass sie trapezförmig sind.

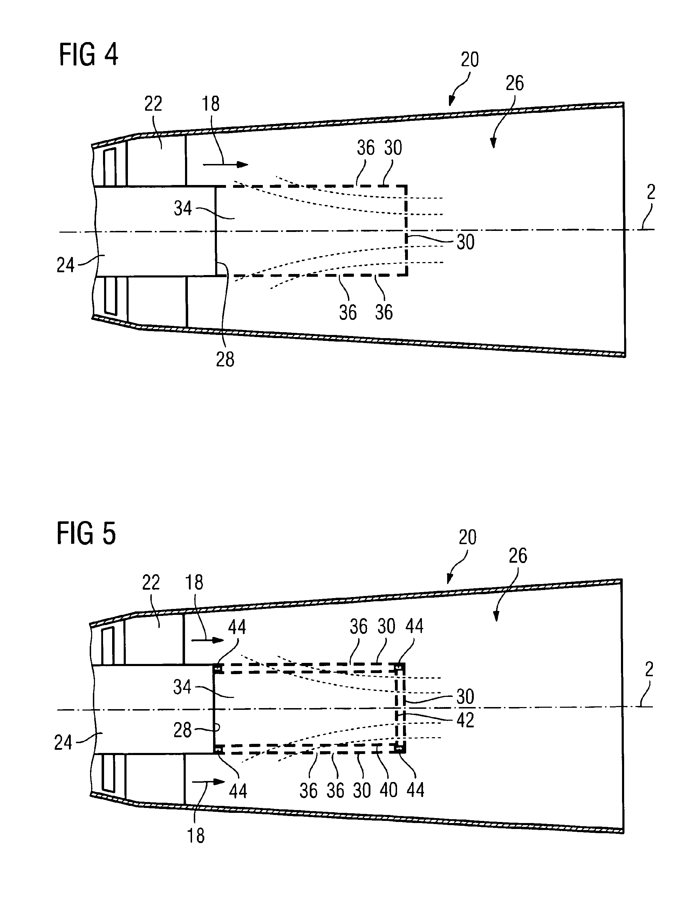

Gemäß einer zweiten Ausgestaltung, welche in FIG 4 schematisch dargestellt ist, ist die am Stummel des Nabenkörpers 24 angeordnete Wand 30 nicht als plattenförmiges Lochblech ausgestaltet, sondern als zylindrisches Lochblech. Folglich umgreift die Wand 30 einen zylindrischen Hohlraum 34. Der Hohlraum 34 wird somit hauptsächlich von der zylindrischen Mantelfläche begrenzt, die von der Wand 30 gebildet ist. Weiter wird der Hohlraum 34 stirnseitig von der am Nabenkörper 24 vorgesehenen stirnseitigen Fläche 28 begrenzt. Dieser Fläche 28 gegenüberliegend kann eine weitere, löchrige Wand 30 am stromabseitigen Ende der zylindrischen Wand 30 vorgesehen sein. Die Wände 30 sind dabei vom Abgas 18 der Gasturbine 1 durchströmbar, indem gleichmäßig oder ungleichmäßig verteilte Löcher 36 mit identischen oder unterschiedlichen Strömungsquerschnitten vorgesehen sind. Wegen der Löcher 36 ist es möglich, dass ein Teil des Abgases 18 in den Hohlraum 34 einströmen kann, was die Ausprägung der Rückstromzone hinter dem ursprünglichen Nabenende 28 verkleinert. Dies führt dazu, dass stromab des Abgasdiffusors 20 angeordnete Kessel und Nachbrenner zuverlässiger als bisher betrieben werden können.

Selbstverständlich ist es möglich, dass der Hohlraum 34 nicht zwingend zylindrisch ausgestaltet ist. Er kann auch kegelstumpfförmig sein.

Gemäß einer dritten Ausgestaltung, welche in FIG 5 schematisch dargestellt ist, ist die durchströmbare Fläche der in den Wänden 30 vorhandenen Löcher 36 mit Hilfe einer drehbaren Hülse 40 veränderbar. Die drehbare Hülse 40 liegt an den Wänden 30 an und weist eine zum Lochmuster der Wände 30 korrespondierende Lochung auf. Gleichzeitig ist die Hülse 40 an ihren beiden axialen Enden 42 mit Hilfe mehrerer Lager 44 gegenüber der Wand 30 verdrehbar. Durch Verdrehen der Hülse 40 gegenüber der Wand 30 können die Löcher der Hülse 40 mit den Löchern 36 der Wände 30 vollständig, teilweise oder gar nicht in Überdeckung gebracht werden, wodurch der durchströmbare Querschnitt der Löcher 36 variabel einstellbar ist.

Mit Hilfe der einstellbaren Strömungsquerschnitte ist es möglich, die Durchströmung des Hohlraums 34 für jeden Betriebspunkt der Gasturbine anzupassen, um stets die bestmögliche Arbeitsweise des Abgasdiffusors 20 zu erreichen, die für den jeweiligen Betriebspunkt der Gasturbine 1 erforderlich ist.

Insgesamt wird mit der Erfindung ein Abgasdiffusor 20 mit einem verlängerten Nabenkörper 24 angegeben, bei dem die Verlängerung durchströmbare Wände 30 umfasst. Die durchströmbaren Wände 30 erstrecken sich in Axialrichtung des Abgasdiffusors 20 und können beispielsweise als plattenförmige Lochbleche oder auch als zylindrische Lochbleche ausgebildet sein. Mit Hilfe der durchströmbaren Wände 30 ist es möglich, die im Abgasdiffusor 20 strömende Abgasströmung derart zu beeinflussen, dass je nach Betriebszustand der Gasturbine 1 entweder verkleinerte Rückströmzonen hinter dem Nabenende auftreten oder der Abgasdiffusor 20 mit einem verbesserten Wirkungsgrad arbeitet.

## Patentansprüche

1. Abgasdiffusor (20) für eine Gasturbine (1),
mit einem sich in Axialrichtung erstreckenden Strömungskanal (26), welcher radial außen von einer Außenwand (21) begrenzt ist und in dessen Zentrum ein Nabenkörper (24) vorgesehen ist,
**dadurch gekennzeichnet, dass**
der Nabenkörper (24) zumindest eine teilweise durchströmbare Wand (30) umfasst.

2. Abgasdiffusor (20) nach Anspruch 1,
bei der die Wand (30) einen Hohlraum (34) zumindest teilweise umgreift.

3. Abgasdiffusor (20) nach Anspruch 2,
bei der der Hohlraum (34) im wesentlich zylindrisch oder konisch konvergent ausgebildet ist.

4. Abgasdiffusor (20) nach Anspruch 1, 2 oder 3,
bei der die Wand (30) eine Vielzahl von vorzugsweise gleichmäßig verteilten Löchern (36) aufweist.

5. Abgasdiffusor (20) nach einem der vorangehenden Ansprüche, bei der die Durchströmbarkeit der Wand (30) einstellbar ist.

6. Abgasdiffusor (20) nach Anspruch 5,
bei der zur Einstellung der Durchströmbarkeit die durchströmbare Querschnittsfläche der Löcher (36) veränderbar ist.

7. Gasturbine (1) mit einem Abgasdiffusor (20) nach einem der vorangehenden Ansprüche.
